# Europäisches Patentamt

## European Patent Office

## Office européen des brevets

(11) Veröffentlichungsnummer: **0 108 416**
**B1**

(12) # EUROPÄISCHE PATENTSCHRIFT

(45) Veröffentlichungstag der Patentschrift:
23.06.89

(51) Int. Cl.⁴: **G 06 F 13/12**, G 06 F 13/28

(21) Anmeldenummer: **83111101.8**

(22) Anmeldetag: **07.11.83**

(54) **Vorrichtung zur Steuerung des Kanalstarts bei einer integrierten mikroprogrammierten Vorrichtung mit mindestens zwei unabhängigen Kanälen zum Handhaben von Informationen und Verfahren zu ihrem Betrieb.**

(30) Priorität: **09.11.82 DE 3241349**

(43) Veröffentlichungstag der Anmeldung:
**16.05.84 Patentblatt 84/20**

(45) Bekanntmachung des Hinweises auf die Patenterteilung:
**23.06.89 Patentblatt 89/34**

(84) Benannte Vertragsstaaten:
**AT DE FR GB IT**

(56) Entgegenhaltungen:
**US-A-3 766 526**

**IBM TECHNICAL DISCLOSURE BULLETIN, Band 22, Nr. 8B, Januar 1980, Seiten 3782-3783, IBM Corp., New York, US; J.A. KISELAK et al.: "Hybrid control store"**

(73) Patentinhaber: **Siemens Aktiengesellschaft, Wittelsbacherplatz 2, D-8000 München 2 (DE)**

(72) Erfinder: **Stadlmeier, Hans, Dipl.,- Ing., Aichacher Strasse 2, D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur Steuerung des Kanalstarts bei einer integrierten mikroprogrammierten Vorrichtung mit mindestens zwei unabhängigen Kanälen zum Handhaben von Informationen nach dem Oberbegriff des Anspruchs 1 und ein Verfahren zu ihrem Betrieb.

Ein integrierter Hochleistungs-DMA-Kontroller ADMA (advanced direct memory access) besitzt beispielsweise vier voneinander unabhängige Kanäle, die den Datentransfer zwischen Medien (Peripherie-Geräte, Speicher), d.h. allgemein zwischen Datenquellen und Datensenken, bewerkstelligen. Die Hauptsteuerung der Kanäle übernehmen Mikroprogramme, die in einem Mikroprogramm-Speicher innerhalb des ADMA enthalten sind. Die bedingungsabhängige Folge der Mikrobefehle wird von einem allen vier Kanälen gemeinsamen Sequenzer gesteuert, der die Mikrobefehle aus dem gemeinsamen Mikroprogramm-Speicher ROM liest. Für jeden der vier Kanäle steht ein Mikroprogramm-Instruktionsregister (MPIRi, i = 0, 1, 2, 3) und ein Mikroprogramm-Adreßregister (MPARi) bereit.

Die Auswahl des zu aktivierenden Kanals und damit die Auswahl des entsprechenden Mikroinstruktionsregisters MPIRi geschieht durch eine Priorisierungseinheit (PRIO), welche ihre Entscheidung aufgrund der folgenden kanalspezifischen Informationen trifft:

Zustand des Kanals (gestartet/gestoppt)
Typ des im Mikroinstruktionsregister MPIRi stehenden Mikrobefehls (organisatorischer Mikrobefehl ORG/Datentransfer-Mikrobefehl DMA)
Synchronisationsart
Synchronisationsereignis
vorgegebene Prioritätsstufe
momentane Prioritätsverteilung.

Die Bedienung eines Kanals (Start, Stop, Continue, Single Step/Halt) geschieht durch Eintrag eines entsprechenden Steuerwortes in ein sogenanntes Steuerregister (general command register) durch die Zentraleinheit (CPU). Dort wird dieses Steuerwort decodiert und führt zum Anstoß der entsprechenden Aktion.

Aus der US-Patentschrift 3 766 526 ist vergleichsweise ein DMA-Prozessor mit 16 Multiplexkanälen bekannt, bei dem die Auswahl des zu startenden Kanals dadurch erfolgt, daß initiiert durch den angeschlossenen Computer die Anfangsadresse eines speicherinternen Befehles in ein separates Programm-Daten-Register und die Nummer des zu steuernden Kanals mittels eines Kanalstartbefehls in ein Kontroll-Status-Register eingetragen werden.

Starten eines Kanals bedeutet, daß der Kanal in die Lage versetzt werden soll, bei zugeteilter Priorität selbständig mittels organisatorischen Mikrobefehlen (ORG) die für den Datentransfer nötige Steuerinformation aus einem Organisationsspeicher zu lesen, um dann bei Vorliegen entsprechender Synchronisationsbedingungen den Datentransfer vorzunehmen. Dies gilt für die Konfiguration des zu startenden Kanals als Selektorkanal. Ist der zu startende Kanal als Multiplexer-Kanal konfiguriert, so müssen zunächst nach den Starten dieses Kanals noch die benötigten Subkanäle gestartet werden, was ebenso über organisatorische Mikrobefehle (ORG) von der Zentraleinheit (CPU) angestoßen und mit einem speziellen Mikroprogramm abgewickelt wird. Auf die Startanforderung folgt also eine mehr oder weniger ausgedehnte Startaktivität.

Beim Starten eines Kanals besteht nun das Problem, den Einsprung in das für die Kanalfiguration richtige Mikroprogramm durch kanalspezifische Bereitstellung des ersten Mikrobefehls des richtigen Mikroprogramms zu ermöglichen.

Da die Transferrate von Informationen möglichst hoch und die Reaktionszeit auf Anforderungen an einen Kanal möglichst kurz sein soll, darf aus 'Performance'-Gründen ein bereits aktiver hochpriorer Kanal durch das Starten eines niederprioren Kanals möglichst nicht behindert werden, abgesehen von dem unvermeidlichen Zugriff der Zentraleinheit (CPU) auf den gemeinsamen Systembus, um den Kanal zu starten.

Darüber hinaus besteht die Möglichkeit, durch ein einziges Steuerwort von der Zentraleinheit (CPU) die Startanforderung für bis zu vier Kanäle gleichzeitig abzugeben. Dies bedeutet, daß die Umsetzung der Startanforderung eines zum Startzeitpunkt niederprioren Kanals in die entsprechende Startaktivität erst dann erfolgen kann, wenn dieser niederpriore Kanal priorisiert wird, wohingegen der höchstpriore Kanal sofort zum Zuge kommt und vielleicht sogar gleich anschließend an die Startaktivität einen Datentransfer durchführt.

Der vorliegenden Erfindung liegt die Aufgabe zugrunde, eine Vorrichtung der eingangs genannten Art und ein Verfahren zu ihren Betrieb anzugeben, die beim Starten eines Kanals den Einsprung in das für die Kanalkonfiguration richtige Mikroprogramm durch Bereitstellung des ersten Mikrobefehls ermöglicht, wobei eine gegebene Prioritätsstufung der verschiedenen Kanäle möglichst ohne Störung gültig bleibt, und wobei ein zusätzlicher Steueraufwand möglichst gering gehalten werden soll.

Diese Aufgabe wird erfindungsgemäß durch eine Vorrichtung nach dem Anspruch 1 gelöst.

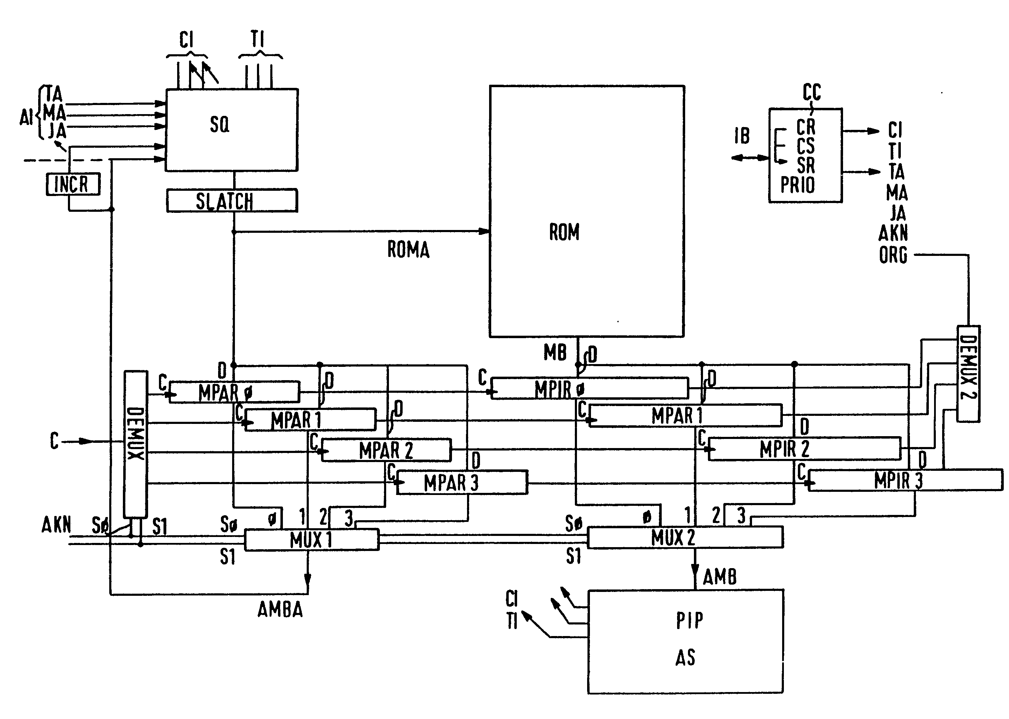

Ausgestaltungen und Vorteile der Erfindung sind in den Unteransprüchen, der Beschreibung und der Zeichnung dargestellt.

Die Priorisierungseinheit PRIO kann die Verwaltung der Überleitung der Startanforderungen in die Startaktivitäten übernehmen. Dann muß den Priorisierungseinheit PRIO mitgeteilt werden, welcher bzw. welche Kanäle gestartet werden sollen.

Ein Ausführungsbeispiel der Erfindung ist in der Zeichnung dargestellt und wird im folgenden näher beschrieben.

Die Figur zeigt ein Blockschaltbild eines Ausführungsbeispiels der Erfindung.

Die zentrale Steuereinheit CC enthält ein Steuerregister CR, ein Statusregister SR, eine Priorisierungseinheit PRIO und Mittel CS, welche mit einer Startanforderung (also dem decodierten Startsteuerwort aus dem zentralen Steuerregister CR) den in den Statusregister SR geführten Status des zu startenden Kanals hardwaremäßig auf 'gestartet' setzt. Damit nimmt nun der zu startende Kanal entsprechend einer vorgegebenen Prioritätsstufe an der Prioritätsverteilung durch die Priorisierungseinheit PRIO teil.

Zusätzlich wird in das kanalspezifische Mikroinstruktionsregister MPIRi, i = 0, 1, 2, 3, des zu startenden Kanals ebenso hardwaremäßig ein organisatorischer Mikrobefehl ORG über einen Demultiplexer DEMUX2 eingetragen. Damit wird dieses kanalspezifische Mikroinstruktionsregister MPIRi initialisiert. Bei entsprechender Wahl der Polarität der Befehlsbits dieses organisatorischen Mikrobefehls ORG läuft diese Initialisierung des kanalspezifischen Mikroinstruktionsregisters MPIRi des zu startenden Kanals auf ein Rücksetzen dieses kanalspezifischen Mikroinstruktionsregisters MPIRi hinaus. Die Startanforderung für einen zu startenden Kanal ist somit in die Generierung eines Mikrobefehls umgesetzt worden.

Dieser organisatorische Mikrobefehl ORG stellt nun Zuteilungsanforderung an die Priorisierungseinheit PRIO, wie dies jeder andere Mikrobefehl auch tut. Da organisatorische Mikrobefehle keiner Synchronisation, also keines externen Triggerereignisses, bedürfen, wird dieser organisatorische Mikrobefehl ORG ausgeführt, sobald kein höherprioer Kanal mehr Zuteilungsanforderung an die Priorisierungseinheit PRIO stellt.

Die Ausführung dieses organisatorischen Mikrobefehls ORG besteht vorteilhafterweise bei entsprechender Wahl der Polarität der Befehlsbits dieses organisatorischen Mikrobefehls ORG ausschließlich in einem unbedingten Sprung auf die Mikrobefehls-Speicheradresse ROMA mit der Nummer 0, wo der erste Mikroprogrammbefehl steht. Durch diesen Sprung auf die Mikrobefehlsadresse ROMA mit der Nummer 0 im Mikrobefehlsspeicher ROM ist gleichzeitig das kanalspezifische zugehörige Mikroprogramm-Adreßregister MPARi initialisiert. Dieses kanalspezifische zugehörige Mikroprogramm-Adreßregister MPARi wird mit der Sprungadresse ROMA mit der Nummer 0 geladen. Ebenso ist nunmehr im kanalspezifischen Mikroinstruktionsregister MPIRi des zu startenden Kanals der im Mikrobefehlsspeicher ROM unter der Mikrobefehls-Speicheradresse ROMA mit der Nummer 0 enthaltene Mikrobefehl eingetragen.

Von jetzt an läuft also die normale Mikroprogramm-Abarbeitung, die je nach Kanalkonfiguration das richtige Startmikroprogramm ausführt.

Nach Ausführung des organisatorischen Mikrobefehls ORG könnte jetzt jedoch bereits die erste Unterbrechung der Aktivität des zu startenden Kanals durch einen höherprioren Kanal erfolgen, entsprechend der Forderung, daß aus 'Performance'-Gründen jeder Kanal nach jeder Ausführung eines Mikrobefehls durch einen anderen Kanal unterbrechbar sein muß.

Die Kanäle sind insofern unabhängig voneinander, als sie ihre Steuerparameter (z. B. Adressen von Datenquelle und Datensenke, Adreßzählrichtung, Bytezahl, Vergleichsbitmuster) aus ihnen zugeordneten Steuerregistern in der zentralen Steuereinheit CC beziehen, welche mit Werten aus Kontrollblöcken von einem sogenannten Organisationsspeicher über einen internen Datenbus IB geladen werden. Da für alle Kanäle möglichst viele Resourcen nur einmal aufgebaut sind, können die Kanäle streng genommen nicht gleichzeitig arbeiten, sondern nur im Pipeline-Verfahren.

Die Hauptsteuerung der Kanäle übernehmen Mikroprogramme, welche beim Starten des Kanals die benötigte Steuerinformation aus dem Organisationsspeicher lesen, interne Verwaltungsaufgaben durchführen, den eigentlichen Datentransfer kontrollieren und schließlich wieder Steuerinformation z. B. Statusinformation, im Organisationsspeicher ablegen.

Das in der Zeichnung dargestellte Ausführungsbeispiel der Erfindung enthält vier verschiedene kanalspezifische Mikroprogramm-Adreßregister MPARi und vier verschiedene Mikroinstruktionsregister MPIRi, einen Mikrobefehlsspeicher ROM, einen Sequenzer SQ und einen Sequenzer-Zwischenspeicher SLATCH. In jedem Mikroprogramm-Adreßregister MPARi steht die Adresse des im zugehörigen Mikroinstruktionsregister MPIRi stehenden Mikrobefehls. Die Mikroinstruktionsregister MPIRi stellen dabei die Stufe 0 des nachgeschalteten Pipelinings der Ausführungssteuerung AS dar. Eine Vorrichtung PIP ermöglicht dabei das Pipelining.

Mit Auswahl des zu aktivierenden Kanals (Priorisierung) werden das zu diesem Kanal gehörige Mikroinstruktionsregister MPIRi und das zu diesem Kanal gehörige Mikroprogramm-Adreßregister MPARi ausgelesen. Die Auswahl des Kanals wird dabei über das Signal AKN gesteuert, welches die aktuelle Kanalnummer angibt. Zu diesem Zweck steuert das Signal AKN über zwei Steuerleitungen S0, S1 zwei Multiplexer MUX1, MUX2 und einen Demultiplexer DEMUX. Am Ausgang des Multiplexers MUX1 erscheint infolge des Signals AKN die zum priorisierten Kanal zugehörige aktuelle Mikrobefehlsadresse AMBA. Am Ausgang des Multiplexers MUX2 erscheint infolge des Signals AKN der zum priorisierten Kanal zugehörige aktuelle Mikrobefehl AMB. Der Demultiplexer DEMUX verfügt über einen Eingang mit dem Taktsignal C. Mit diesem Taktsignal C werden die zum priorisierten Kanal zugehörigen Mikrobefehls-Adreßregister MPARi und Mikroinstruktionsregister MPIRi geclockt.

Die Ausführung des aktuellen Mikrobefehls AMB wird von einer Ausführungssteuerung AS überwacht. Während der Ausführung dieses aktuellen Mikrobefehls AMB stellt ein Sequenzer SQ aufgrund von Testinformationen TI und Steuerinformationen CI die Mikrobefehlsadresse ROMA des in dem jeweils gerade priorisierten Kanal folgenden Mikrobefehls MB bereit. Diese Mikrobefehlsadresse ROMA wird in einem Zwischenspeicher SLATCH zwischengespeichert und steuert einen Lesezyklus im Mikrobefehls-Festwertspeicher ROM an, welcher dann den neuen kanalspezifischen Mikrobefehl MB liefert.

Die Steuerinformationen CI und die Testinformationen TI werden dabei sowohl von der zentralen Steuereinheit CC als auch von der Ausführungssteuerung AS geliefert. Die aktuelle Mikrobefehlsadresse AMBA kann bei Bedarf über einen Inkrementer INCR inkrementiert werden und auf diese Weise die Mikrobefehlsadresse ROMA des kanalspezifisch folgenden neuen Mikrobefehls MB liefern. Der Sequenzer SQ erhält jedoch zusätzliche Adreßinformationen AI von der zentralen Steuereinheit CC oder auch von einem aktuellen Mikrobefehl AMB. Eine solche zusätzliche Adreßinformation AI kann beispielsweise eine Testadresse TA, eine Mapadresse MA oder eine Sprungadresse (jump adress) JA sein.

Am Ausführungsende des aktuellen Mikrobefehls AMB werden der kanalspezifisch neu gelesene folgende Mikrobefehl MB in das zugehörige kanalspezifische Mikroinstruktionsregister MPIRi und die neue zugehörige folgende Mikrobefehlsadresse ROMA aus dem Zwischenspeicher SLATCH in das kanalspezifische zugehörige Mikroprogramm-Adreßregister MPARi des aktuellen Kanals eingetragen. Wird die Auswahl des gerade aktuellen Kanals nun unterbrochen, so steht, wenn dieser Kanal später wieder priorisiert wird, sofort der zu diesem Kanal dazugehörige Mikrobefehl im zugehörigen Mikroinstruktionsregister MPIRi bereit.

## Patentansprüche

1. Vorrichtung zur Steuerung des Kanalstarts bei einem DMA-Kontroller mit mindestens zwei unabhängigen Kanälen zum Datentransfer zwischen Datenquellen und Datensenken und einer zentralen Steuereinheit (CC), die ein Steuerregister (CP), ein Statusregister (SR) und eine Priorisierungseinheit (PRIO) enthält, dadurch gekennzeichnet, daß jeder Kanal über ein eigenes Mikroinstruktionsregister (MPIRi; i = 1, 2, ... n) verfügt, das an einen Demultiplexer (DEMUX2) angeschlossen ist, über den bei Vorliegen einer Startanforderung ein Mikrobefehl von der zentralen Steuereinheit in das Mikroinstruktionsregister (MPIRi) des zu startenden Kanals eingetragen wird.

2. Vorrichtung nach Anspruch 1, gekennzeichnet durch Mittel (CI) zum Setzen des in einem Status-Register (SR) geführten Status des zu startenden Kanals auf "gestartet" nach einer Startanforderung für diesen Kanal im Steuerregister (CP).

3. Verfahren zum Betrieb einer Vorrichtung zur Steuerung des Kanalstarts bei einem DMA-Kontrolle mit mindestens zwei unabhängigen Kanälen zum Datentransfer zwischen Datenquellen und Datensenken und einer zentralen Steuereinheit (CC), die ein Steuerregister (CR), ein Statusregister (SR) und eine Priorisierungseinheit enthält, dadurch gekennzeichnet, daß bei Vorliegen einer Startanforderung für einen zu startenden Kanal ein Mikrobefehl (ORG) von der zentralen Steuereinheit in das kanalspezifische Mikroinstruktionsregister (MPIRi) des zu startenden Kanals eingetragen wird.

4. Verfahren nach Anspruch 3, dadurch gekennzeichnet, daß der Mikrobefehl (ORG) ein Rücksetzen des betreffenden kanalspezifischen Mikroinstruktionsregister (MPIRi) bewirkt.

5. Verfahren nach Ansprüchen 3 und 4, dadurch gekennzeichnet, daß der Mikrobefehl (ORG) in dem betreffenden kanalspezifischen Mikroinstruktionsregister (MPIRi) eine Zuteilungsanforderung an die Priorisierungseinheit (PRIO) stellt.

6. Verfahren nach Anspruch 3, dadurch gekennzeichnet, daß mit einer Startanforderung für einen zu startenden Kanal dieser Kanal entsprechend einer vorgegebenen Prioritätsstufung an der Prioritätsverteilung durch die Priorisierungseinheit (PRIO) teilnimmt.

7. Verfahren nach einem der Ansprüche 3 bis 6, dadurch gekennzeichnet, daß die Ausführung des Mikrobefehls (ORG) in einem unbedingten Sprung auf eine bestimmte Adresse (ROMA) in einem Mikroprogrammspeicher (ROM) besteht.

## Claims

1. Device for controlling the channel start of a DMA controller having at least two independent channels for data transfer between data sources and data sinks and a central control unit (CC) which contains a control register (CR), a status register (SR) and a prioritizing unit (PRIO), characterized in that each channel has at its disposal its own microinstruction register (MPIRi; i = 1, 2, ... n), which is connected to a demultiplexer (DEMUX2), via which, given the occurrence of a start request, a microinstruction is entered by the central control unit into the microinstruction register (MPIRi) of the channel to be started.

2. Device according to Claim 1, characterized by means (CI) for setting to "started" the status, carried in a status register (SR), of the channel to be started after a start request for this channel in the control register (CR).

3. Method of operating a device for controlling the channel start of a DMA controller having at least two independent channels for data transfer between data sources and data sinks and a central control unit (CC) which contains a control register (CR), a status register (SR) and a prioritizing unit, characterized in that, given the occurrence of a start request for a channel to be started, a microinstruction (ORG) is entered by the central control unit into the channel-specific microinstruction register (MPIRi) of the channel to be started.

4. Method according to Claim 3, characterized in that the microinstruction (ORG) effects a resetting of the channel-specific microinstruction register (MPIRi) concerned.

5. Method according to Claims 3 and 4, characterized in that the microinstruction (ORG) in the channel-specific microinstruction register (MPIRi) concerned submits an allocation request to the prioritizing unit (PRIO).

6. Method according to Claim 3, characterized in that, given a start request for a channel to be started, this channel participates in the priority distribution by the prioritizing unit (PRIO) in accordance with a predetermined priority level.

7. Method according to one of Claims 3 to 6, characterized in that the execution of the micro-instruction (ORG) consists in an unconditional jump to a definite address (ROMA) in a microprogram memory (ROM).

## Revendications

1. Dispositif pour commander le lancement d'un canal dans un dispositif DMA de contrôle d'accès direct en mémoire, comportant au moins deux canaux indépendants pour le transfert de données entre des sources de données et des dispositifs de réception de données et une unité de commande centrale (CC), qui contient un registre de commande (CA), un registre d'états (SR) et une unité d'affectation de priorité (PRIO), caractérisé par le fait que chaque canal dispose d'un registre propre de micro-instructions (MPIRi; i = 1, 2, ... n), qui est raccordé à un démultiplexeur (DEMUX2), au moyen duquel, lors de la présence d'une demande de lancement, une micro-instruction est introduite par l'unité de commande centrale dans le registre de micro-instructions (MPIRi) du canal devant être lancé.

2. Dispositif suivant la revendication 1, caractérisé par des moyens (CI) pour positionner l'état, introduit dans un registre d'états (SR), du canal devant être lancé sur "lancé" conformément à une demande de lancement pour ce canal, présente dans le registre de commande (CR).

3. Procédé d'utilisation d'un dispositif pour commander le lancement d'un canal dans un dispositif DMA de contrôle d'accès direct en mémoire, comportant au moins deux canaux indépendants pour le transfert de données entre des sources de données et des dispositifs de réception de données et une unité de commande centrale (CC), qui contient un registre de commande (CA), un registre d'états (SR) et une unité d'affectation de priorité, caractérisé par le fait que, dans le cas de la présence d'une demande de lancement pour un canal devant être lancé, une micro-instruction (ORG) est introduite par l'unité centrale de commande dans le registre de micro-instructions (MPIRi), spécifique à ce canal, du canal devant être lancé.

4. Procédé suivant la revendication 3, caractérisé par le fait que la micro-instruction (ORG) déclenche une remise à l'état initial du registre de micro-instructions (MPIRi) spécifique à un canal.

5. Procédé suivant les revendications 3 et 4, caractérisé par le fait que la micro-instruction (ORG) située dans le registre de micro-instructions (MPIRi), spécifique à un canal, représente une demande d'affectation à l'unité d'affectation de priorité (PRIO).

6. Procédé selon la revendication 3, caractérisé par le fait qu'avec une demande de lancement pour un canal à lancer, ce canal participe à la répartition des priorités d'une unité d'affectation des priorités (PRIO), en fonction d'une répartition prédéterminée en priorités.

7. Procédé suivant l'une des revendications 3 à 6, caractérisé par le fait que l'exécution de la micro-instruction (ORG) consiste en un saut conditionnel à une adresse déterminée (ROMA) dans une mémoire de microprogrammes (ROM).

EP 0 108 416 B1